# EUROPEAN PATENT APPLICATION

(11) **EP 1 258 338 A2**
(43) Date of publication of application: **20.11.2002**
(21) Application number: 02010752.0
(22) Date of filing: 14.05.2002
(51) Int. Cl.: B29C 70/00, B29D 30/38

(54) **Composite of steel cord and rubber composition and tire using the same**

(30) Priority: 15.05.2001 JP 2001144691; 04.07.2001 JP 2001203764
(71) Applicant: Sumitomo Rubber Industries, Ltd., Kobe-shi, Hyogo (JP)
(72) Inventor: Miyazaki, Shinichi Sumitomo Rubber Industries Ltd., Kobe-shi (JP); Fukumoto, Toru Sumitomo Rubber Industries Ltd., Kobe-shi (JP); Toda, Osamu Sumitomo Rubber Industries Ltd., Kobe-shi (JP); Iizuka, Toru Sumitomo Rubber Industries Ltd., Kobe-shi (JP)
(74) Representative: Manitz, Finsterwald & Partner GbR

(57) **Abstract**

A steel cord-rubber composite (10) is provided, that has improved initial adhesion property and adhesion property against aging between the steel cord and the rubber composition with improved manufacturing cost efficiency. A steel cord-rubber composition composite includes a coating layer and a steel cord (1), and the coating layer includes an inner coating layer (2) formed of a rubber composition containing a rubber component, a cobalt compound and sulfur and directly covering the steel cord, and an outer coating layer (3) formed of a rubber composition of which contents of cobalt compound and sulfur are smaller than those of the inner coating layer and coating the outer portion of the inner coating layer.

## Description

### BACKGROUND OF THE INVENTION

### Field of the Invention

The present invention relates to a rubber composition for steel cord coating and a composite of the steel cord and the rubber composition using the same. More specifically, the present invention relates to a rubber composition for coating a steel cord with improved initial adhesion property and adhesion property against aging with the steel cord as well as improved cost efficiency, and to a composite of the steel cord and the rubber composition.

The present invention also relates to a pneumatic tire using a cord ply of metal cords as a reinforcing layer, in which rubber hardness around the metal cord is made higher than the hardness of topping rubber, so as to prevent separation of rubber at and around the metal cord to attain improved durability.

### Description of the Background Art

Generally, in rubber products such as automobile tires and conveyer belts, steel cords are used as reinforcing members, to improve the performance. It is noted that higher safety, improved performance at high speed running and improved durability of automobile tires have been increasingly required. When an adhesion layer between the rubber and the steel cord used as the tire reinforcing member is broken by the heat generated at the time of running, it causes serious tire failure. Therefore, further improvement of the adhesion between the steel cord and the rubber is desired.

Conventionally, the steel cord is generally plated with brass, which is an alloy of copper and zinc, and the steel cord is directly adhered to rubber utilizing reaction of the plated brass and sulfur in the rubber composition, in order to improve adhesion to rubber and to enhance the reinforcing effect. In the composite of steel cord and the rubber composition, when a large amount of sulfur is mixed in the rubber, heat aging property of the rubber composition after vulcanization is significantly degraded. Therefore, a method has been proposed, in which the amount of added sulfur component is reduced and a bismaleimide compound is used as a cross-linking agent in place of sulfur, so as to improve heat aging property of the rubber composition. Reduction of sulfur in the rubber composition and mixture of the bismaleimide compound considerably degrade the initial adhesion with the conventional steel cord plated with brass. Thus, it has been difficult to apply this method to tires.

To the coating rubber composition that is in contact with the steel cord, generally, a cobalt salt of an organic acid is mixed as an adhesion accelerator, to improve adhesion with rubber. When a large amount of cobalt salt of the organic acid is used, superior adhesion immediately after vulcanization, that is, superior initial adhesion property can be attained. The cobalt salt of the organic acid, however, reacts with the vulcanization accelerator or antioxidant in the rubber composition, promoting thermal degradation of rubber and generation of water therefrom, resulting in inferior adhesion property against aging. Further, there is another disadvantage that molecular chain of rubber is cut in the unvulcanized state, lowering performance of the rubber as the material for tires. In addition, this approach is also disadvantageous in view of cost, as the cobalt salt of organic acid is very expensive.

When other metal salt of organic acid is mixed in place of the cobalt salt of organic acid, adhesion immediately after vulcanization is inferior. Thus, at present, metal salt of organic acid as a substitute for cobalt has not been practically used.

Therefore, a composite of steel cord and rubber composition that has superior initial adhesion property and stable adhesion property against aging even when the amount of sulfur mixed therein is reduced is desired and further, a composite of steel cord and rubber composition that has superior initial adhesion property and stable adhesion property against aging even when the amount of addition of the cobalt salt of organic acid is reduced is desired.

To meet such demands, various techniques have been proposed to improve adhesion property between steel cord and rubber.

For example, Japanese Patent Laying-Open No. 64-31837 discloses a technique in which a cobalt salt of organic acid and sulfur are contained in the rubber composition, and the surface of the steel cord is provided with a cobalt plating layer. Japanese Patent Laying-Open No. 4-11637 discloses an improvement of this technique, in which a cobalt salt of organic acid, sulfur and a bismaleimide compound are contained in the rubber composition, and the surface of the steel cord is provided with a cobalt plating layer. Japanese Patent Laying-Open No. 5-65370 discloses a technique in which acetylacetone cobalt and sulfur are contained in the rubber composition, and the surface of the steel cord is provided with a brass plating layer to have the copper/zinc ratio of 60/40 to 65/35. Japanese Patent Laying-Open No. 5-247271 discloses a technique in which moisture content of rubber composition before vulcanization is adjusted to 0.2 to 0.7% and the surface of the steel cord is provided with a cobalt plating layer. Japanese Patent Laying-Open No. 10-324753 discloses a technique in which an organic solvent containing diene type rubber component and a cobalt compound is applied to a zinc-plated steel cord, and the steel cord is vulcanized and adhered to rubber composition not containing any cobalt compound. Japanese Patent Laying-Open No. 1-153783 discloses a technique in which a reaction mixture mainly containing a cobalt salt of organic carboxylic acid-boron metallic soap is applied to the steel cord. Japanese Patent Laying-Open No. 11-21389 discloses a technique in which rosin or rosin derivative, sulfur, a cobalt salt of an organic acid and an organic chlorine compound are contained in the rubber composition, and the surface of the steel cord is provided with a zinc plating layer. Japanese Patent Laying-Open No. 2000-7839 discloses a technique in which silica powder of which specific surface area of nitrogen adhesion (BET) of not higher than 150m²/g is contained in the rubber composition. Further, Japanese Patent Laying-Open No. 2000-7838 discloses a technique in which porous inorganic filler is contained in the rubber composition.

It has been difficult, however, to ensure satisfactory initial adhesion property and adhesion property against aging between rubber and steel cord, and to provide a tire that is cost-efficient, using a composite of steel cord and rubber composition.

Further, there is a difference in hardness between a metal cord (in the present specification, it encompasses a steel cord) and the topping rubber coated thereon. Therefore, deformation behavior as the tire runs differ significantly. Therefore, even when adhesion between the metal cord and the topping rubber is improved by the use of the cobalt salt of organic acid, separation tends to occur at the interface between the metal cord and the topping rubber, or in the rubber layers near the metal cord, because of stress concentration, degrading durability of the tire.

### SUMMARY OF THE INVENTION

In view of the foregoing, an object of the present invention is to provide a rubber composition for coating a steel cord with improved initial adhesion property and adhesion property against aging with the steel cord, and to provide a composite of steel cord and rubber composition using the same.

Another object of the present invention is to provide a pneumatic tire in which, based on a concept of forming a coating rubber layer containing cobalt salt of organic acid and harder than the topping rubber around the metal cord, the amount of use of the cobalt salt of organic acid is minimized, the cost is reduced, degradation or thermal degradation of the topping rubber are prevented while ensuring necessary adhesion property, stress concentration is relaxed by providing a gradient in the difference in hardness between the metal cord and the topping rubber, and separation is suppressed to improve durability.

Here, adhesion reaction between the steel cord and the rubber composition takes place in the thickness of about several tens to several hundreds Å at the adhesion interface, and what is important is the adhesion property at this portion. Accordingly, the inventors tried hard to solve the above described problems, focusing on the fact that the rubber composition having superior adhesion property with steel cord have only to exist as a thin film at the interface between the two, when then steel cord and the rubber composition are adhered to each other.

As a result, the inventors have found that it is possible to ensure good initial adhesion property and adhesion property against aging of the rubber composition with respect to steel cord, by using a composite of steel cord and rubber composition that includes a steel cord, and an inner coating layer and an outer coating layer of mutually different compositions, and that a cost-efficient tire can be provided using the composite of steel cord and rubber composition.

More specifically, the present invention provides a composite of steel cord and rubber composition including a coating layer and a steel cord, wherein the coating layer includes an inner coating layer consisting of rubber composition containing a rubber component, a cobalt compound and sulfur and directly coating the steel cord, and an outer coating layer consisting of a rubber composition of which content of the cobalt compound and the content of sulfur are smaller than the contents of these in the inner coating layer and coating outer side of the inner coating layer.

In the composite of steel cord and rubber composition of the present invention, preferably, the rubber composition forming the inner coating layer contains 0.5 to 5 parts by weight of cobalt compound, and 3 to 8 parts by weight of sulfur, with respect to 100 parts by weight of the rubber component.

In the composite of steel cord and rubber composition of the present invention, preferably, the cobalt compound is a cobalt salt of an organic acid.

In the composite of steel cord and rubber component of the present invention, it is recommended that the thickness of the inner coating layer formed of the rubber component is 0.1 to 1.5 mm.

The present invention further provides a tire that uses the above described composite of steel cord and rubber composition.

The present invention further provides a pneumatic tire using as a tire reinforcing layer, a cord ply having metal cords, wherein the cord ply is a sheet-shaped body prepared by aligning coated cords that are obtained by coating the metal cords with coating rubber layer parallel to each other and further coated by topping rubber; the coating rubber layer is formed of rubber having a cobalt salt of an organic acid mixed therein and having rubber hardness higher than the topping rubber; and the coating rubber layer has rubber hardness (durometer A hardness) of 65° to 100° and the topping rubber has the rubber hardness (durometer A hardness) of 40° to 65°.

Further, in the pneumatic tire of the present invention, preferably, thickness of the coating rubber layer is 0.1 to 1.0 times the diameter of the metal cord.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 represents an example of the composite of steel cord and rubber composition in accordance with the present invention.
Fig. 2 is an illustration representing another example of the composite of steel cord and rubber composition of the present invention.
Fig. 3 illustrates the steps of manufacturing the composite of the steel cord and the rubber composition in accordance with the present invention.
Fig. 4A is an illustration representing the method of forming samples for wet-heat adhesion, used for evaluating performance of the composite of steel cord and rubber composition of the present invention.
Fig. 4B is an illustration representing the method of peeling test of the samples for wet-heat adhesion.
Fig. 5 is a cross section representing an embodiment of the pneumatic tire in accordance with the present invention.
Fig. 6 is a cross section showing, in enlargement, the cord ply shown in Fig. 5.

### DESCRIPTION OF THE PREFERRED EMBODIMENTS

Embodiments of the present invention will be described in detail with reference to the figures.

### <Composite of Steel Cord and Rubber Composition>

First, an embodiment of the composite of steel cord and rubber composition of the present invention will be described in detail in the following.

The composite of steel cord and rubber composition of the present invention includes a steel cord, and a coating layer formed of a rubber composition containing a rubber component, a cobalt compound and sulfur.

In the rubber composition of the present invention, natural rubber (NR) or synthetic rubber is used as the rubber component. Preferable synthetic rubber includes, for example, polybutadiene rubber (BR), polyisoprene rubber (IR), styrene butadiene rubber (SBR), butyl rubber (IIR), halogenated butyl rubber and chloroprene rubber (CR). Further suitable examples include brominated butyl rubber, butyl rubber having paramethyl styrene group (more specifically, a copolymer of isobutylene and p-halogenated methyl styrene or the like), acrylonitrile-butadiene rubber (NBR) and ethylene-propylene-diene rubber (EPDM).

One or two of natural rubber and the above-listed synthetic rubber materials may be appropriately used as the rubber component of the rubber composition in accordance with the present invention, dependent on the application of the rubber product using the steel cord as a reinforcing member. In view of adhesion property and rubber breaking characteristic, a rubber component that contains at least 50 weight % of natural rubber and/or synthetic isoprene rubber is suitable as the rubber component.

In the present invention, cobalt salt of organic acids that fits well with rubber, such as cobalt stearate, cobalt naphthenate, cobalt oleate, cobalt linoleate, cobalt neodecanoate, cobalt orthoborate, cobalt octoate, rosin cobalt, tolu balsam cobalt, or a cobalt-boron complex may preferably be used as the cobalt compound. The cobalt salt of organic acid has good affinity with oil and rubber, and ensures good adhesion between the steel cord and the rubber. Generally, a cobalt salt of organic acid is used as a liquid phase oxidation catalyst, and obtained by the method in which a cobalt acetate solution is added to an alkali soap aqueous solution of the corresponding organic acid to cause double decomposition precipitation, a method in which the organic acid and cobalt oxide (II) are heated and melted or the method in which an aqueous solution of cobalt sulfate or cobalt linoleate is added to a benzine solution of the organic acid.

In the present invention, the content of cobalt compound in the rubber composition of the inner coating is, desirably, 0.5 to 5 parts by weight per 100 parts by weight of the rubber component. When the content of cobalt compound is smaller than 0.5 parts by weight, the initial adhesion property and the adhesion property against aging between the steel cord and rubber composition tends to degrade. When the content of cobalt compound exceeds 5 parts by weight, manufacturing cost increases as the content of cobalt compound increases while the improvement of the initial adhesion property is not much recognized for the amount. Further, the cobalt salt of organic acid reacts with the vulcanization accelerator and the antioxidant in the rubber composition, promoting thermal degradation of rubber and associated generation of water. Thus, the adhesion property against aging of the rubber composition tends to degrade.

In the present invention, it is desirable that in the. rubber composition of the outer coating, content of cobalt compound is smaller than the content of cobalt compound in the rubber composition of the inner coating, or that the cobalt compound is not contained at all. When the content of cobalt compound in the rubber composition of the outer coating exceeds the content of the cobalt compound in the rubber composition of the inner coating, manufacturing cost increases as the content of cobalt compound increases, and the cobalt salt of organic acid reacts with the vulcanization accelerator, antioxidant or the like in the rubber composition, promoting thermal degradation of rubber and associated generation of water. Thus, the adhesion property against aging of the rubber composition tends to degrade. Further, as the rubber composition of the outer coating is not in direct contact with the steel cord, adhesion property of the rubber composition with the steel cord is not affected, even when the cobalt compound is not contained.

In the present invention, preferably, the content of sulfur in the rubber composition of the inner coating is 3 to 8 parts by weight per 100 parts by weight of rubber component. When the content of sulfur is smaller than 3 parts by weight, it is impossible to provide sufficient sulfur to generate CuxS (generated by the reaction between sulfur and copper in the brass plating of the steel cord) that is the source to exhibit the power of adhesion. When the content of sulfur exceeds 8 parts by weight, CuxS is excessively generated, resulting in cohesive fracture of the enlarged CuxS, lowering adhesion, and heat and aging resistances as the physical properties of rubber also tend to degrade.

In the present invention, preferably, the content of sulfur in the rubber composition of the outer coating is smaller than the content of sulfur in the rubber composition of the inner coating, and more preferably, the content of sulfur is 3 parts by weight or smaller per 100 parts by weight of the rubber component. When the content of cobalt compound in the rubber composition of the outer coating exceeds the content of cobalt compound in the rubber composition of the inner coating, CuxS is generated excessively, so that cohesive fracture of the enlarged CuxS occurs, and heat and aging resistances as physical properties of rubber tend to degrade.

In the rubber composition of the present invention, in addition to the components described above, additive agents generally used in the rubber industry may appropriately be added by common amounts, provided that the object of the present invention is maintained. More specifically, the following agents may be added: softening agent such as process oil; vulcanization accelerator including varieties of guanidine such as diphenylguanidine, varieties of thiazole such as mercaptobenzothiazole, varieties of sulfenamide such as N,N'-dicyclohexyl-2-benzothiazolyl sulfenamide, varieties of thiuram such as tetramethyl thiuram disulfide; vulcanization accelerator assistant such as zinc oxide (zinc white) or the like; amine type, phenol type or wax type antioxidant; and a filler such as carbon black, silica or calcium carbonate.

Of these, the filler such as carbon black or silica has been known as an agent that increases tensile strength, breaking strength, tensile stress and hardness, and improves wear resistance and tensile resistance. Zinc oxide forms, together with fatty acid, a complex compound, and is known as a vulcanization accelerator assistant that enhances the effect of vulcanization acceleration.

Carbon black of HAF, ISAF, SAF or the like is preferably used for the rubber composition of the present invention. Preferable content of carbon black is 40 to 80 parts by weight per 100 parts by weight of rubber component.

Preferable contents of other components used for the rubber composition of the present invention are as follows. Per 100 parts by weight of rubber component, 3 to 10 parts by weight of zinc oxide (zinc white), 0.5 to 3 parts by weight of antioxidant, and 0.5 to 2 parts by weight of vulcanization accelerator.

Further, preferably, the steel cord to which the rubber composition of the present invention is applied is plated with brass, zinc or an alloy of brass containing nickel or cobalt, or an alloy of zinc containing nickel or cobalt, in order to improve adhesion with rubber. Brass plating is particularly preferable. When the Cu content of brass plating of the steel cord is at most 75 weight % and preferably in the range of 40 to 70 weight %, good and stable adhesion is attained. There is no specific restriction as to the twisted structure of the steel cord.

The present invention provides a composite of steel cord and rubber composition that includes the rubber composition for coating the steel cord described above and the steel cord. The composite is suitably used as a reinforcing member to improve performance of industrial rubber products such as automobile tires and conveyer belts.

Preferably, the inner coating rubber layer of the present invention has the thickness in the range of 0.1 to 1.5 mm (an average of two portions, 0-180°). When the thickness of the inner coating rubber layer is smaller than 0.1 mm, it becomes difficult to make uniform the inner coating rubber layer, and the base material may possibly be exposed. Thus, processing is difficult. When the thickness of the inner coating rubber layer exceeds 1.5 mm, it becomes larger than the thickness of the rubber-covered sheet, which is not preferable in view of production efficiency and cost.

The thickness of the outer coating rubber layer of the present invention is not particularly limited. The outer coating rubber layer of arbitrary thickness may be provided as a topping, in accordance with the intended used of the steel cord-rubber composition composite of the present invention.

In the present invention, the surface of the steel cord or steel wire is coated with rubber composition of the inner coating layer. Therefore, it becomes possible to eliminate or minimize the cobalt salt of organic acid that has been contained in the rubber composition of the outer coating layer, that has directly coated the surface of the steel cord or steel wire. Therefore, rubber mixture of the outer coating layer becomes possible, which suppresses aging of adhesion strength, thermal degradation of breaking strength, elongation and the like and increase in manufacturing cost derived from the addition of cobalt salt of organic acid.

Further, the content of sulfur that has been contained by a relatively large amount (3 to 8 parts by weight) in the rubber composition of the outer coating layer to maintain stable heat resistant adhesion property can also be reduced to be smaller than 3 parts by weight. Accordingly, degradation of heat and aging resistances as the physical properties of rubber of the outer coating layer resulting from excessive addition of sulfur can be suppressed, and crack-extension resistance is significantly improved.

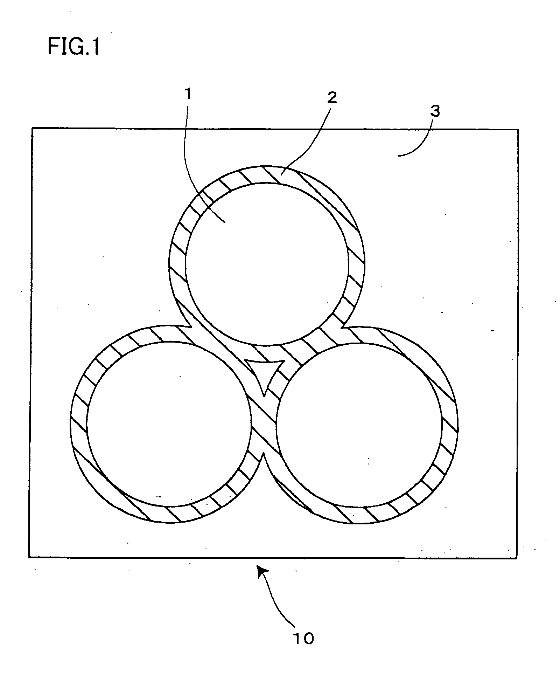

Fig. 1 shows a cross section of a representative example of steel cord-rubber composition composite in accordance with the present invention. Three steel wires 1, each coated with the rubber composition 2 of the inner coating layer in accordance with the present invention are twisted together to provide the composite of steel cord and rubber composition. Rubber composition 3 of the outer coating layer in accordance with the present invention is provided as a topping, further on the outside of the composite, thus forming the composite 10 of steel cord and rubber composition of the present invention. In this example, the number of twisted steel wires 1 is not limited to 3.

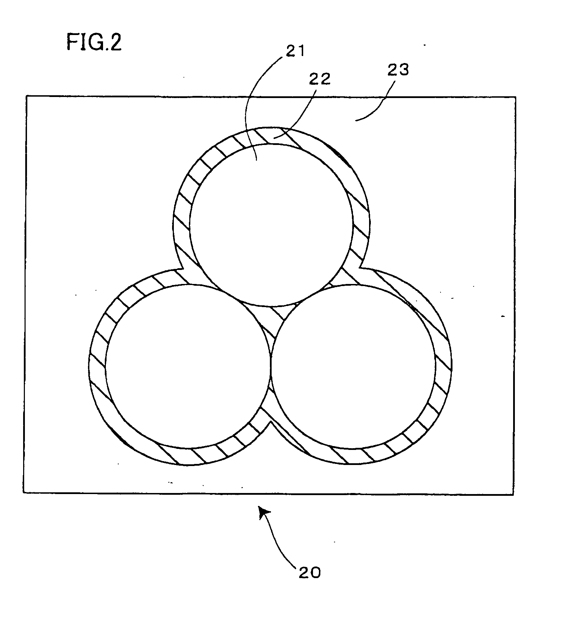

Fig. 2 shows a cross section of another example of the steel cord-rubber composition composite in accordance with the present invention. A steel cord obtained by twisting three steel wires 21 are coated with the rubber composition 22 of the inner coating layer in accordance with the present invention, providing a composite of steel cord and rubber composition. Rubber composition 23 of the outer coating layer in accordance with the present invention is provided as a topping further on the outside of the composite, thus providing the composite 20 of steel cord and the rubber composition of the present invention. In this example also, the number of twisted steel wires 21 is not limited to 3.

The method of manufacturing a composite of steel cord and rubber composition in accordance with the present invention includes: the inner coating layer adhering step in which rubber composition of the inner coating layer is adhered to the steel wire; the twisting step in which steel wires are twisted; and the outer coating layer adhering step in which rubber composition of an outer coating layer is adhered further on the outside of the inner coating layer; wherein the rubber composition of the outer coating layer contains cobalt compound and sulfur by smaller contents than the rubber composition of the inner coating layer, or the rubber composition of the outer coating layer does not contain any cobalt compound and content of sulfur is smaller than that of the rubber composition of the inner coating layer.

When the composite of steel cord and rubber composition shown in Fig. 1 is manufactured, first, in the inner coating layer adhering step, a rubber composition containing a rubber component, a cobalt compound and sulfur is adhered to the steel wire. Thereafter, in the twisting step, the steel wire-rubber combined bodies resulting from the inner layer adhering step are twisted to manufacture the composite of steel cord and rubber composition in the shape of Fig. 1. In this manufacturing method, the number of twisted steel wires 1 is not limited to 3.

When the composite of steel cord and rubber composition of Fig. 2 is manufactured, first, in the twisting step, steel wires are twisted to manufacture a steel cord. Thereafter, in the adhering step, a rubber composition containing a rubber component, a cobalt compound and sulfur are adhered to the steel cord, to manufacture the composite of steel cord and rubber composition in the shape of Fig. 2. In this manufacturing method also, the number of twisted steel wires 21 is not limited to 3.

In the inner coating layer adhering step, the steel wire or the steel cord may be simultaneously extruded with rubber composition containing a rubber component, a cobalt compound and sulfur, so that the rubber composition is adhered thereon. Alternatively, the rubber composition may be dissolved in an organic solvent and applied or sprayed to the steel wire or steel cord, or the steel wire or cord may be dipped therein, followed by hot-air blowing to remove the organic solvent. This approach is superior in view of uniform amount of adhesion or simplicity of the method.

In the twisting step, the twisting structure of the steel cord and the number of steel wires to be twisted is not specifically limited. The diameter of steel cord strands, cord diameter and the like may be appropriately selected in accordance with the use thereof after the steel cord is adhered to the rubber composition of the present invention to provide the composite.

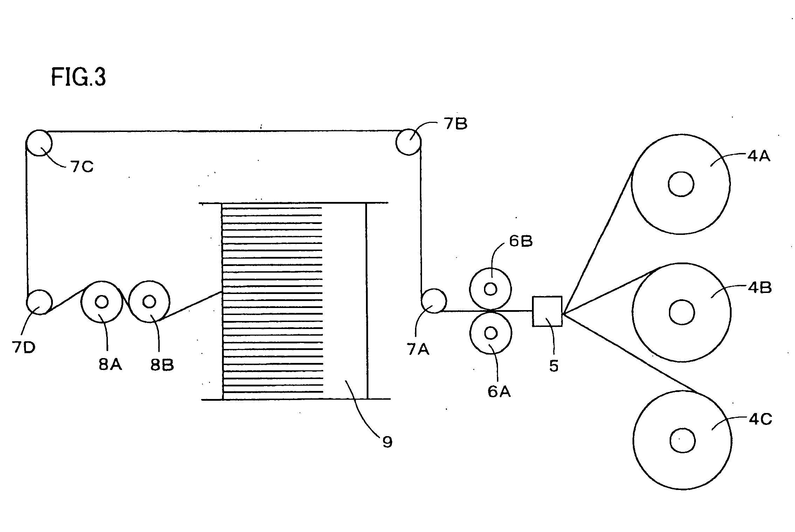

Fig. 3 is an illustration representing an example of a method of manufacturing the composite of steel cord and rubber composition shown in Fig. 1. A total of three supply rolls 4A, 4B and 4C are provided, and steel wires are wound on the supply rolls. In the passage lines from supply rolls 4A, 4B and 4C to a drum 5, a rubber composition containing a rubber component, a cobalt component and sulfur dissolved in an organic solvent, is applied to each of the steel wires. At drum 5, the three steel wire-rubber combined bodies are twisted, thus providing the composite of steel cord and rubber composition. Thereafter, the resulting composite of steel cords and rubber composition are passed through drums 6A and 6B, 7A, 7B, 7C, 7D and 8A and 8B, and wound around a take-up drum 9.

On the outer side of the composite including the steel cords and the rubber composition of inner coating layer manufactured through the series of steps shown in Fig. 3, a rubber composition of outer coating layer, of which contents of cobalt compound and the sulfur are smaller than those of the rubber composition of the inner coating layer, or the rubber composition of the outer coating layer that does not contain any cobalt compound and the content of sulfur is smaller than that of the rubber composition of inner coating layer, is provided as a topping, followed by vulcanization under known conditions, whereby a composite of steel cord and rubber composition of the present invention is manufactured.

The tire in accordance with the present invention uses the composite of steel cord and rubber composition of the present invention as a reinforcing member. The composite of steel cord and rubber composition of the present invention may be used at any portion where the reinforcing member is to be used. For example, the composite may be suitably used for a carcass, a breaker, a band and the like. More specifically, when a toroidal carcass formed of the composite of steel cord and rubber composition in accordance with the present invention arranged substantially parallel to a medium section of a radial tire for automobiles and a belt formed of a composite of steel cord and rubber composition of the present invention arranged outside a crown portion of the carcass and inner portion of a tread are used, durable life of the radial tire for automobiles can significantly be improved.

The composite of steel cord and rubber composition in accordance with the present invention may also be suitably used as a reinforcing member of industrial rubber products such as conveyer belts. For example, when the steel cord-rubber composite of the present invention is used as a reinforcing member for a steel cord conveyer belt that is often used under high temperature, high moisture environment, reliability over a very long period is obtained. Thus, the cost and labor for maintenance, inspection, repair and so on can be reduced. Further, the composite may also be used as reinforcing members for hoses, crawler belts, marine hoses and the like.

### <Pneumatic Tire>

An embodiment of a pneumatic tire in accordance with the present invention will be described with reference to the figures.

In the following description, it is intended that a metal cord includes a steel cord. Further, the composite of the metal cord and rubber composition includes a cord ply. Further, the coating rubber layer refers to an inner coating layer formed of rubber composition, and the topping rubber refers to an outer coating layer formed of rubber composition.

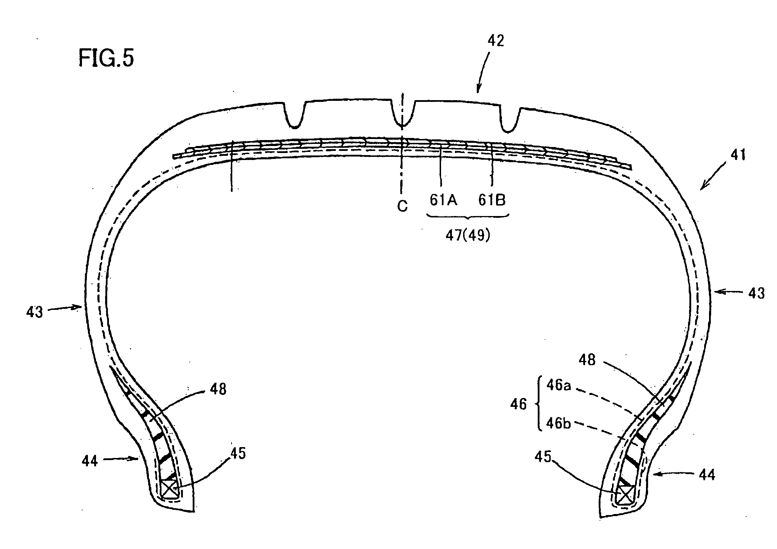

Fig. 5 is a meridian section of a pneumatic tire in accordance with the present invention, which is, in this example, an automobile tire.

Referring to Fig. 5, a pneumatic tire 41 includes a carcass 46 extending from a tread portion 42 through a sidewall portion 43 to a bead core 45 of a bead portion 44, and a belt layer 47 arranged inside the tread portion 42 and radially outside the carcass 46.

In the present embodiment, of the tire reinforcing layer 49 including carcass 46 and belt layer 47, the belt layer 47 is formed by cord plies 61a and 61b having metal cords 50.

Carcass 46 has, in the present embodiment, a conventional structure having at least one carcass cord arranged at an angle of 75° to 90° relative to the equator C of the tire, and formed of one carcass ply 46 in the present embodiment. Carcass ply 46 includes, at opposing ends of a body portion 46a bridging between bead cores 45, 45, folded portions 46b folded from the inside to the outside around the bead core 45. Between the body portion 46a and the folded portion 46b, a bead apex rubber 48 for reinforcing the bead is arranged, extending radially outward with tip end made gradually thinner, from the bead core 45. As the carcass cord, in the present embodiment, organic fiber cord of nylon, polyester, rayon, aromatic polyimide or the like is used.

Next, the belt layer 47 includes two or more, and in the present embodiment two, cord plies 61A and 61B.

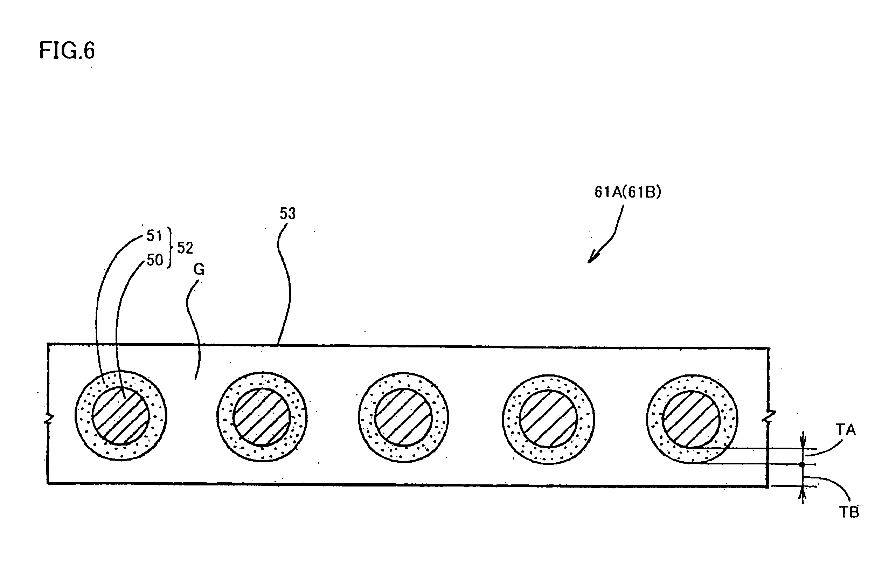

As shown in Fig. 6, cord plies 61A and 61B are each formed of a sheet body 53, prepared by providing coated cords 52 having metal cords 50 coated with thin coating rubber layer 51, aligning the coated cords 52 parallel to each other and coating both front and rear sides of the thus provided cord arrangement with topping rubber G. The metal cords 50 are arranged inclined at an angle of 15 to 45° relative to the circumferential direction of the tire in the present embodiment, and crossed between the plies. Therefore belt stiffness is increased, and the tread portion 42 is firmly reinforced with fixing effect.

The metal cord 50 is not specifically limited, and strand diameter, cord diameter, twisted structure and the like may appropriately be selected in accordance with the required cord properties. More specifically, the metal cord may be a twisted cord having a plurality of metal strands twisted together, or a single line cord formed of a single metal strand. Further, bundle twisting, layer twisting, open twisting and the like may be adopted as the twisting structure. The metal strand may be subjected to forming, to have a wave or spiral shape, before twisting.

In view of adhesion with coating rubber layer 51, it is preferred to have the metal strand plated in the conventional manner, that is, it may preferably be brass-plated or zinc-plated. Fig. 6 shows an example in which the metal cord 50 consists of a brass-plated single cord.

It is very important that coating rubber layer 51 contains cobalt salt of organic acid, and that the rubber layer is formed of hard rubber of which rubber hardness is larger than that of the topping rubber G.

More specifically, in the present embodiment, considering tire running property, conventional soft rubber having the rubber hardness Hs1 (durometer A hardness) of 40° to 65° is used as the topping rubber G, while hard rubber having the rubber hardness Hs2 of 65° to 100°, preferably, 70° to 100° is used as the coating rubber layer 51. Here, the difference in rubber hardness (Hs2 - Hs1) should preferably be in the range of 0 to 60°, and more preferably, 5 to 30°.

In this manner, an intermediate coating rubber layer 51 is interposed between metal cord 50 and topping rubber G, to provide hardness gradient between metal cord 50 and topping rubber G. Thus, difference in hardness between metal cord 50 and coating rubber layer 51 neighboring with each other and the difference in hardness between coating rubber layer 51 and topping rubber G can be reduced, and stress concentration resulting from difference in deformation behavior during tire running can be dissipated and relaxed. Therefore, separation not only at the contact surface between metal cord 50 and coating rubber layer 51 and contact surface of coating rubber layer 51 and topping rubber G but also in the topping rubber G can effectively be suppressed.

Preferably, thickness TA of coating rubber layer 51 is at least smaller than the coating thickness TB of topping rubber G on coated cord 52. In view of separation suppressing effect, thickness TA should preferably be 0.1 to 1.0 times the diameter of the metal cord.

Here, when rubber hardness Hs1 of topping rubber G is smaller than 40°, the rubber is too soft, and steering stability and durability degrade.
When the hardness exceeds 65°, the rubber is too hard and similar properties (stirring stability and durability) again deteriorate.

When the difference of rubber hardness Hs2 - Hs1 goes out of the aforementioned range (0 to 60°), appropriate hardness gradient cannot be obtained, for example, difference in hardness between metal cord 50 and coating rubber layer 51 or difference in hardness between coating rubber layer 51 and topping rubber G may be excessively large, and the separation suppressing effect cannot be fully exhibited. When the rubber hardness Hs2 is smaller than 65° or larger than 100°, it becomes difficult to maintain the difference in rubber hardness Hs2 - Hs1 within the aforementioned range.

When the thickness TA of coating rubber layer 51 is smaller than 0.1 times the cord diameter, dissipation and relaxing of stress cannot be sufficiently attained. When the thickness is larger than 1.0 times, the thickness of the topping rubber becomes too large and the amount of cobalt salt of organic acid used therein increases, which is disadvantageous in view of cost.

In order to attain the above described separation suppressing effect, it is also important to ensure adhesion between metal cord 50 and coating rubber layer 51. For this purpose, coating rubber layer 51 has cobalt salt of organic acid mixed in the rubber base material. Here, natural rubber, isoprene rubber and diene type rubber such as butadiene rubber and styrene butadiene rubber may suitably be used as the rubber base material. The diene type rubber material may be used by itself, or two or more diene type rubber materials may be used mixed with each other.

As the cobalt salt of organic acid, those conventionally used for adhesion with metal cord may suitably be used. For example, cobalt napththenate, cobalt stearate, cobalt oleate, cobalt dodecanoate, cobalt tridecilate, cobalt palmitate and cobalt alanate may be used.

The amount of mixture of the cobalt salt of organic acid is not specifically limited. Preferably, the amount of mixture in terms of the amount of cobalt should preferably be in the range of 0.05 to 1.0 parts by weight per 100 parts by weight of rubber base material. When the amount is less than 0.05 parts by weight, it is difficult to maintain necessary adhesion with metal cord 50. When the amount exceeds 1.0 parts by weight, further improvement of adhesion is not expected, while cost advantage reduces.

In coating rubber layer 51, in order to ensure high rubber hardness Hs2 mentioned above, carbon black as a reinforcing agent is mixed by 50 to 80 parts by weight per 100 parts by weight of rubber base material. A vulcanizer, a vulcanization accelerator and a vulcanization acceleration assistant that are generally used for tire rubber may selectively be used as other additives. Further, in order to attain the aforementioned rubber hardness Hs2, resin materials such as resorcinol or resorcinol type resin may be used as an assistant. In view of cost and manufacturing process, however, use of the resin material is not preferable.

In topping rubber G, in order to reduce rubber hardness Hs1, the amount of mixed carbon black is set within the range of 50 to 60 parts by weight, that is smaller than in coating rubber layer 51, per 100 parts by weight of rubber base material, that is, the diene type rubber mentioned above. In topping rubber G, it is unnecessary to add cobalt salt of organic acid, as it is not in contact with metal cord. Therefore, various conventional problems resulting from the cobalt salt of organic acid including degradation and thermal degradation of topping rubber G and increased cost can simultaneously be resolved. It is needless to say that other additive such as the vulcanizer, the vulcanizing accelerator, the vulcanization assistant and the like mentioned above may selectively be used in topping rubber G.

Next, the method of forming coated cord 52 will be described. The rubber composition mixed with cobalt salt of organic acid to form the coating rubber layer 51 is liqudified by solving the same in an organic solvent such as toluene, and metal cord 50 may be dipped in the rubber solution for coating. Alternatively, a rubber extruder may be used so that the metal cord 50 and the rubber composition are extruded simultaneously, with the rubber component coating the metal cord.

The cord ply 61 of the present embodiment may be used for the belt layer 47 as described above, and in addition, it may be used for various tire reinforcing layers including carcass 46, a band layer (not shown) or a bead reinforcing layer (not shown) reinforcing the bead portion 44.

### <Examples of the Composite of Steel Cord and Rubber Composition>

The composite of steel cord and rubber composition in accordance with the present invention will be described in greater detail with reference to specific examples. The present invention, however, is not limited thereto.

### Example 1

A steel wire that has been drawn to have the diameter of 0.27 mm was plated with brass containing 63 mass % of copper and 37 mass % of zinc, and mineral oil was sprayed thereto. Three steel wires prepared in this manner were twisted to have a cord diameter of 0.58 mm, and thus a steel cord was fabricated.

The thus fabricated steel cord was dipped in a toluene solution containing 10 mass % of rubber composition of the mixture A listed in Table 1 and dried, providing a composite (composite (I)) of steel cord and rubber composition forming the inner coating layer, in which the thickness of the coating rubber layer was 0.1 to 1.5 mm (average thickness: 0.5 mm).

**Table 1:**

| Mixture of Rubber Composition (in parts by weight) | | | | | | |
|---|---|---|---|---|---|---|
| Added Agents | Mixture (PHR) | | | | | |
| | Mixture A | Mixture B | Mixture C | Mixture D | Mixture E | Mixture F |
| Natural Rubber(NR) | 100 | 100 | 100 | 100 | 100 | 100 |
| Carbon Black (HAF) | 60 | 60 | 60 | 60 | 60 | 60 |
| Zinc White | 8 8 | 8 | 8 | 8 | 8 | 8 |
| Antioxidant (*1) | 2 | 2 | 2 | 2 | 2 | 2 |
| Mineral Oil | 2 | 2 | 2 | 2 | 2 | 2 |
| Vulcanization Accelerator (*2) | 1 | 1 | 1 | 1 | 1 | 1 |
| Sulfur | 5 | 2 | 5 | 5 | 2 | 9 |
| Cobalt Naphthanate | 1 | 0 | 0 | 6 | 1 | 1 |

| | | | | | | |
|---|---|---|---|---|---|---|
| *1: 2, 2, 4-trimethyl-1, 2-dihydroquinoline copolymer | | | | | | |
| *2: DZ (N, N'-dicyclohexyl-2-benzothiazolyl sulfenamide) | | | | | | |

Thereafter, composite (I) 12 was coated with outer coating rubber compositions 33, 33a as toppings, that have the mixture B of Table 1, the resulting body was vulcanized at 165°C for 18 minutes, and a sample (I) for wet-heat adhesion was fabricated.

Further, the composite (I) was coated with the outer coating rubber composition of mixture B of Table 1 as a topping, to have a gauge of 1.15 mm, and a belt layer was fabricated. Using the belt layer, a tire (I) was made as a sample, using the belt layer, under the condition as specified by Table 2.

**Table 2:**

| Sample Tire Condition | |
|---|---|
| Item | Condition |
| Carcass | 1670dtex/2 PET(50 ends), 1 |
| Belt layer | steel (40 ends) 2, + 20° - 20° |
| Sample Tire Size | 195/65R15 |

Here, "ends" refers to the number of embedded combined bodies of steel cord and rubber composition, per every 5 cm of the ply.

### Comparative Example 1

A composite (composite (II)) of steel cord and rubber composition forming the inner coating layer of Comparative Example 1 was fabricated under the same condition as composite (I).

The composite (II) was coated with outer coating rubber composition of mixture A shown in Table 1 as a topping, vulcanized at 165°C for 18 minutes, and a sample (II) for wet-heat adhesion was fabricated in the similar manner as Example 1.

Further, composite (II) was coated with the outer coating rubber composition of mixture A described in Table 1 as a topping to have the gauge of 1.15 mm, and a belt layer was fabricated. Using the belt layer, a tire (II) was formed under the condition of Table 2.

### Comparative Example II

A composite (composite (III)) of steel cord and rubber composition forming the inner coating layer was fabricated under the same condition as composite (I), except that the inner coating layer was of the rubber composition having the mixture B of Table 1.

The composite (III) was coated with the outer coating rubber composition of mixture B of Table 1 as a topping, vulcanized at 165°C for 18 minutes, and a sample (III) for wet-heat adhesion was fabricated in the similar manner as Example 1.

Further, composite (III) was coated with the outer coating rubber composition of mixture B of Table 1 as a topping to have the gauge of 1.15 mm, and a belt layer was fabricated. Using the belt layer, a tire (III) was formed under the condition of Table 2.

### Example II

A composite (composite (IV)) of steel cord and rubber composition forming the inner coating layer was fabricated under the same condition as composite (I), except that the thickness of inner coating layer was 0.05 mm.

The composite (IV) was coated with the outer coating rubber composition of mixture B shown in Table 1 as a topping, vulcanized at 165°C for 18 minutes and a sample (IV) for wet-heat adhesion was fabricated in the similar manner as Example 1.

Further, the composite (IV) was coated with the outer coating rubber composition of mixture B shown in Table 1 as a topping, to have the gauge of 1.15 mm, and thus a belt layer was fabricated. Using the belt layer, a tire (IV) was formed under the condition shown in Table 2.

### Example 3

A composite (composite (V)) of steel cord and rubber composition forming the inner coating layer was fabricated under the same condition as composite (I), except that the thickness of the inner coating layer was 2.0 mm.

The composite (V) was coated with the outer coating rubber composition of mixture B shown in Table 1 as a topping, vulcanized at 165°C for 18 minutes and, in the similar manner as in Example 1, a sample (V) for wet-heat adhesion was fabricated.

Further, the composite (V) was coated with the outer coating rubber composition of mixture B shown in Table 1 to have the gauge of 1.15 mm as a topping, and a belt layer was fabricated. Using the belt layer, a tire (V) was formed under the condition shown in Table 2.

### Comparative Example 3

In Comparative Example 3, the inner coating layer was not directly adhered to the steel cord.

The steel cord was directly coated with the outer coating rubber composition of mixture B shown in Table 1 as a topping, vulcanized at 165°C for 18 minutes, and in the similar manner as Example 1, a sample (VI) for wet-heat adhesion was fabricated.

Further, the steel cord was directly coated with outer coating rubber composition of mixture B shown in Table 1 to have the gauge of 1.15 mm as a topping, and a belt layer was fabricated. Using the belt layer, a tire (VI) was formed under the condition shown in Table 2.

### Comparative Example 4

A composite (composite (VII)) of steel cord and rubber composition forming the inner coating layer was fabricated under the same condition as composite (I), except that the inner coating layer was of a rubber composition having the mixture C shown in Table 1.

The composite (VII) was coated with the outer coating rubber composition of mixture B shown in Table 1 as a topping, vulcanized at 165°C for 18 minutes, and in the similar manner as Example 1, a sample (VII) for wet-heat adhesion was fabricated.

Further, the composite (VII) was coated with the outer coating rubber composition of mixture B shown in Table 1 to have the gauge of 1.15 mm as a topping, and a belt layer was fabricated. Using the belt layer, a tire (VII) was formed under the condition shown in Table 2.

### Example 4

A composite (composite (VIII)) of steel cord and rubber composition forming the inner coating layer of Example 4 was fabricated under the same condition as composite (I) except that the inner coating layer was of the rubber composition having mixture D shown in Table 1.

The composite (VIII) was coated with the outer coating rubber composition of mixture B shown in Table 1 as a topping, vulcanized at 165°C for 18 minutes and, in the similar manner as Example 1, a sample (VIII) for wet-heat adhesion was fabricated.

Further, the composite (VIII) was coated with the outer coating rubber composition of mixture B shown in Table 1 to have the gauge of 1.15 mm as a topping, and a belt layer was fabricated. Using the belt layer, a tire (VIII) was formed under the condition shown in Table 2.

### Example 5

A composite (composite (IX)) of steel cord and rubber composition forming the inner coating layer was fabricated under the same condition as composite (I) except that the inner coating layer was of the rubber composition of mixture E shown in Table 1.

Further, the composite (IX) was coated with the outer coating rubber composition of mixture B shown in Table 1 as a topping, vulcanized at 165°C for 18 minutes and, in the similar manner as Example 1, a sample (IX) for wet-heat adhesion was fabricated.

The composite (IX) was coated with the outer coating rubber composition of mixture B shown in Table 1 to have the gauge of 1.15 mm as a topping, and a belt layer was fabricated. Using the belt layer, a tire (IX) was formed under the condition shown in Table 2.

### Example 6

A composite (composite (X)) of steel cord and rubber composition forming the inner coating layer was fabricated under the same condition as composite (I) except that the inner coating layer was of a rubber composition of mixture F shown in Table 1.

The composite (X) was coated with the outer coating rubber composition of mixture B shown in Table 1 as a topping, vulcanized at 165°C for 18 minutes, and in the similar manner as Example 1, a sample (X) for wet-heat adhesion was fabricated.

Further, composite (X) was coated with the outer coating rubber composition of mixture B shown in Table 1 to have the gauge of 1.15 mm as a topping, and a belt layer was fabricated. Using the belt layer, the tire (X) was formed under the condition shown in Table 2.

### Performance Evaluation

### <Peeling Test>

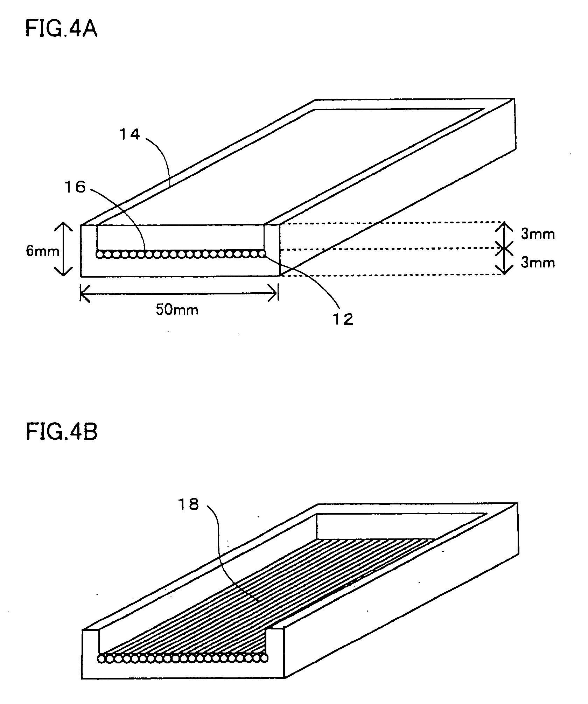

The fabricated heat-wet adhesion samples (I) to (X) were put in an oven at a temperature of 80°C and relative moisture of 95%, left for 120 hours, cut (at cutting 14) as shown in Fig. 4A and peeled from a peeling position 16, and thus peeling test was performed. The cutting test was also performed after the fabricated wet-heat adhesion samples were left for zero hour.

Peeled surface 18 of Fig. 4B was visually observed, and based on the evaluation reference of Table 3, the results of peeling test were given in Tables 4 and 5, as numerical values to the tenth place. In Tables 4 and 5, rubber composition of the inner coating layer, thickness of the inner coating layer and rubber composition of outer coating layer constituting the composite of steel cord and rubber composition, are also given.

**Table 3:**

| Evaluation Reference for Peeling Test | |
|---|---|
| Rank | Evaluation reference |
| 5 | Fully coated with rubber and plated surface of steel cord is not visible |
| 4 | 3 to 6 portions of plated surface of steel cord visible |
| 3 | 13 to 20 portions of plated surface of steel cord visible |
| 2 | 21 or more portions of plated surface of steel cord visible, while at least 60% of the overall body is coated with rubber |
| 1.5 | 30 to 60% of steel cord coated with rubber |
| 1 | Less than 30% of steel cord coated with rubber |

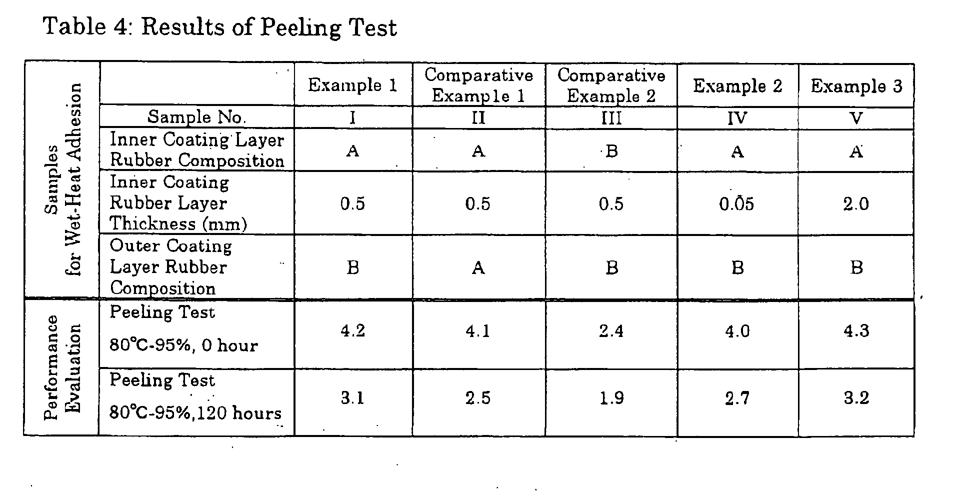

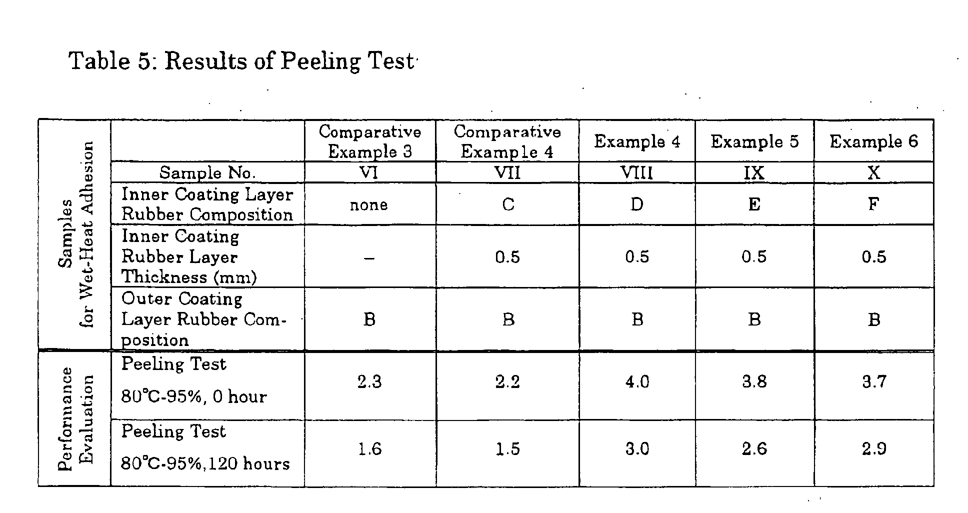

### <High Speed Running Endurance Test>

Further, high speed running durability test was performed on the sample tires (I) to (X). Using a drum tester, ambient temperature was adjusted to 26 ± 5°C, the tire (I) to (X) was mounted on a rim, and the running speed was increased from 170 km/h stepwise by 10 km/h at every 10 minutes with inner pressure of 280 kPa and the load of 492 kg, and the running was continued until the tire failed. The running distance until failure was indicated as an index, with the Comparative Example 1 being the reference, 100. The larger index means higher high speed running durability. The test results are as shown in Tables 6 and 7. In Tables 6 and 7 again, the rubber composition of inner coating layer, thickness of the inner coating layer and rubber composition of the outer coating layer constituting the composite of steel cord and rubber composition are given.

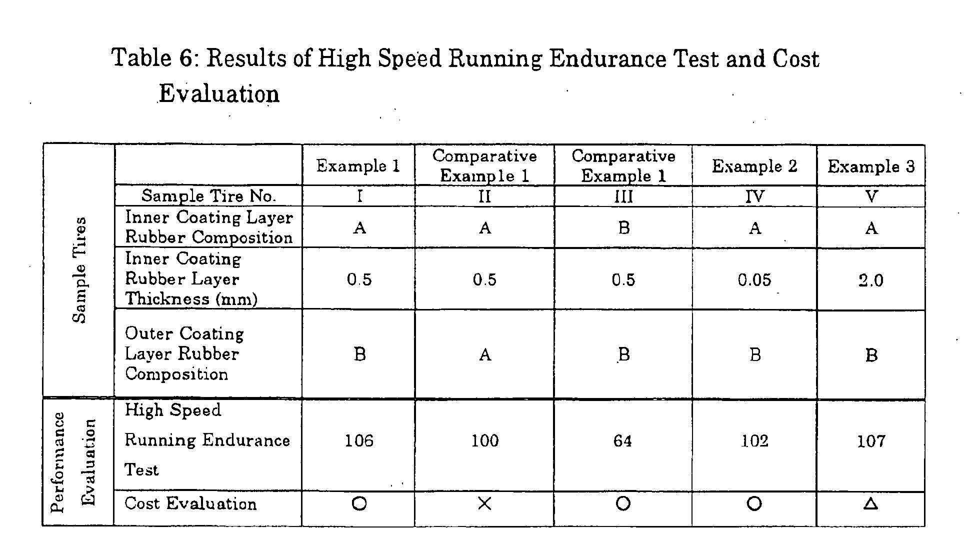

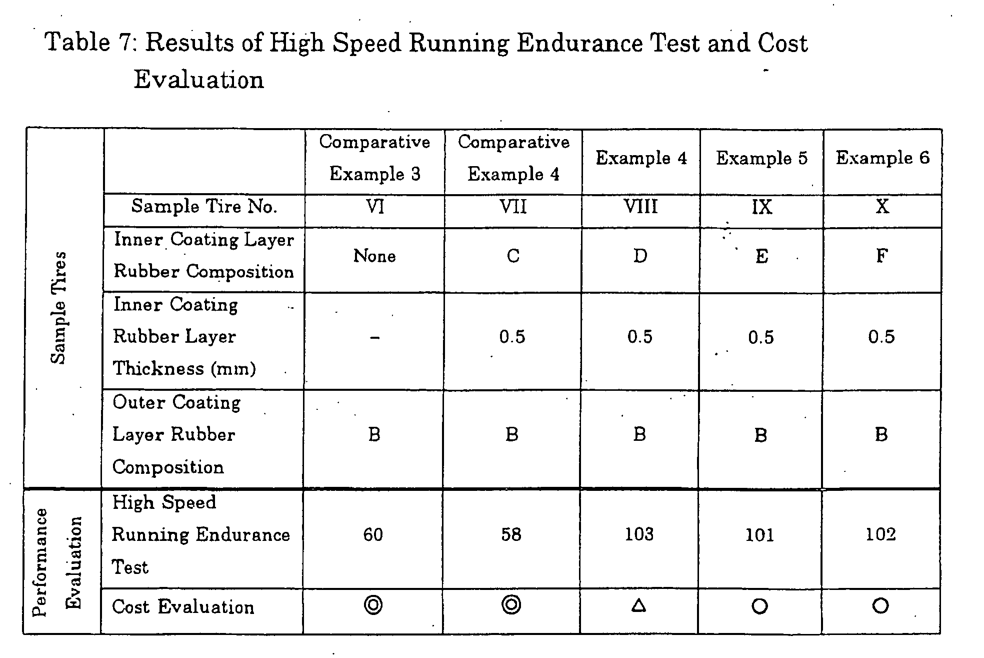

### <Cost Evaluation>

Manufacturing cost for the sample tires (I) to (X) was also evaluated. The results of evaluation are as shown in Tables 6 and 7. The cost evaluation in Tables 6 and 7 are given by: very inexpensive (ⓞ), inexpensive (○), expensive (Δ), and very expensive (×).

### <Results of Evaluation>

From the results of peeling test, it was found that the combined bodies of steel cord and rubber composition in accordance with the present invention exhibited satisfactory initial adhesion and adhesion property against aging between steel cord and rubber composition. From the results of high speed running endurance test, it was found that the tire using the combined bodies of steel cord and rubber composition in accordance with the present invention as reinforcing members exhibited superior durability. From the results of cost evaluation, it was also found that the tire using the combined bodies of steel cord and rubber composition in accordance with the present invention as the reinforcing members can be provided with the manufacturing cost suppressed.

### <Examples of Pneumatic Tire>

The pneumatic tires in accordance with the present invention will be described in greater detail in the following with reference to specific examples. The present invention, however, is not limited thereto.

### Examples 7 and 8, and Comparative Examples 5 and 6

First, samples of tires having the tires size of 195/65R15 using the cord ply in accordance with the present invention as the belt layer were formed in accordance with the specification shown in Table 8, and endurance of the sample tires were tested and compared, in accordance with the following test method. A carcass in accordance with the following conventional specification was used in the samples: ply number (1), cord (polyester, 1670dtex), cord angle (89°).

### <Method of Testing Tire Durability>

Using a drum tester, a load which is 150% of maximum load defined by JIS (Japanese Industrial Standard) was applied, and the pressure which is 80% the inner pressure defined by JIS was provided and tire running at 80 km/h was continued until the tire failed. The running distance was given by an index with the Comparative Example 5 being 100.

**Table 8:**

| Specification of Tire Samples | | | | | |
|---|---|---|---|---|---|
| | | Comparative Example 5 | Example 7 | Example 8 | Comparative Example 6 |
| Belt Layer | Ply Number | 2 | 2 | 2 | 2 |
| | Cord Angle (°) | +20/-20 | +20/-20 | +20/-20 | +20/-20 |
| | Cord Type | Steel (1×1×0.42) | Steel (1×1×0.42) | Steel (1×1×0.42) | Steel (1×1×0.42) |
| | Cord Diameter (mm) | 0.60 | 0.60 | 0.60 | 0.60 |
| Coating Rubber Layer | Composition (*1) | Rubber C | Rubber A | Rubber B | Rubber B |
| | Rubber Thickness TA (mm) | 0.50 | 0.50 | 0.50 | 0.50 |
| | Rubber Hardness Hs2(°) | 65 | 75 | 70 | 70 |
| Topping Rubber | Composition (*1) | Rubber C | Rubber D | Rubber D | Rubber E |
| | Rubber Thickness TA (mm) | 1.00 | 1.00 | 1.00 | 1.00 |
| | Rubber Hardness Hsl(°) | 65 | 60 | 60 | 38 |
| Difference in Hardness Hs2-Hs1 | | 0 | 15 | 10 | 32 |
| Tire Durability | | 100 | 104 | 103 | 91 |

| | | | | | |
|---|---|---|---|---|---|
| *1:See Table 9 | | | | | |

**Table 9:**

| Mixture Ratio of Rubber Composition | | | | | | |
|---|---|---|---|---|---|---|
| | | Rubber A | Rubber B | Rubber C | Rubber D | Rubber E |
| Natural Rubber (NR) | | 100PHR | 100PHR | 100PHR | 100PHR | 100PHR |
| Zinc White | | 10 | 10 | 10 | 10 | 10 |
| Stearic Acid | | 1 | 1 | 1 | 1 | 1 |
| Carbon Black (HAF) | | 65 | 60 | 55 | 55 | 35 |
| Antioxidant (*1) | | 2 | 2 | 2 | 2 | 2 |
| Sulfur | | 5 | 5 | 4 | 2 | 2 |
| Vulcanization DZ Accelerator (*2) | | 1.2 | 1 | 1 | 1 | 1 |
| Cobalt Naphthenate | Mixture Compound | 2 | 2 | 2 | - | - |
| | Amount of Cobalt | 0.2 | 0.2 | 0.2 | - | - |

| | | | | | | |
|---|---|---|---|---|---|---|
| *1: 2, 2, 4-trymethyl-1, 2-dihydroquinoline copolymer | | | | | | |
| *2: DZ; N, N'- dicyclohexyl-2-benzothiazolyl sulfenamide | | | | | | |

The composite of steel cord and rubber composition of the present invention includes a coating layer and a steel cord, and the coating layer has a unique structure including an inner coating layer formed of a rubber composition containing a rubber component, a cobalt compound and sulfur and directly coating the steel cord, and an outer coating layer formed of a rubber composition having cobalt compound and sulfur in smaller contents than in the inner coating layer and surrounding the outer portion of the inner coating layer.

As the composite of steel cord and rubber composition of the present invention has such a structure, it becomes possible to ensure good initial adhesion property and adhesion property against aging of the rubber composition with steel cord. The tire in accordance with the present invention using the composite of the steel cord and the rubber composition has superior durability, and is advantageous in view of manufacturing cost.

Further, in the pneumatic tire in accordance with the present invention, a coating rubber layer with cobalt salt of organic acid having higher hardness than the topping rubber is formed around the metal cord as described above. Therefore, the amount of use of cobalt salt of organic acid can be minimized and necessary adhesion property is ensured while the cost is reduced and degradation and thermal degradation of topping rubber can be prevented.

Further, in the pneumatic tire of the present invention, a structure is employed in which the metal cord and the topping rubber has a gradient of difference in hardness. Thus, it becomes possible to dissipate and relax the stress, and, with the additional effect of ensuring adhesion, it becomes possible to suppress separation and to improve durability.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A composite (10) of steel cord and rubber composition, consisting of a coating layer and the steel cord (1), **characterized in that**
the coating layer includes
an inner coating layer (2) consisting of a rubber composition containing a rubber component, a cobalt compound and sulfur, and directly coating said steel cord (1), and
an outer coating layer consisting of a rubber composition of which cobalt compound content and sulfur content are smaller than those in the inner coating layer (2), and covering an outer portion of said inner coating layer (2).

2. The composite (10) of steel cord and rubber composition according to claim 1, wherein
the rubber composition forming said inner coating layer (2) contains 0.5 to 5 parts by weight of cobalt compound and 3 to 8 parts by weight of sulfur, per 100 parts by weight of the rubber component.

3. The composite (10) of steel cord and rubber composition according to claim 1, wherein
said cobalt compound is a cobalt salt of an organic acid.

4. The composite (10) of steel cord and rubber composition according to claim 1, wherein
the inner coating layer (2) of said rubber composition has a thickness of 0.1 to 1.5 mm.

5. A tire using the composite (10) of steel cord and rubber composition according to any of claims 1 to 4.

6. A pneumatic tire (41) using a cord ply (61a, 61b) having a metal cord (50) as a tire reinforcing layer (49), **characterized in that**
said cord ply (61a, 61b) is a sheet-shaped body prepared by aligning coated cords (52) obtained by coating said metal cord (50) with a coating rubber layer (51), parallel to each other, and coating the aligned body with a topping rubber (G),
said coating rubber layer (51) is of a hard rubber mixed with a cobalt salt of an organic acid and having rubber hardness higher than said topping rubber (G), and
said coating rubber layer (51) has durometer A hardness of 65° to 100° and the topping rubber (G) has durometer A hardness of 40° to 65°.

7. The pneumatic tire (41) according to claim 6, wherein
said coating rubber layer (51) has a thickness (TA) that is 0.1 to 1.0 times the diameter of the metal cord (50).
